# EUROPEAN PATENT SPECIFICATION

(11) **EP 3 897 116 B1**
(45) Date of publication and mention of the grant of the patent: **12.06.2024**
(21) Application number: 19820756.5
(22) Date of filing: 16.12.2019
(51) Int. Cl.: A01K 63/04

(54) **FISH FARMING TANK FOR CULTIVATING LIVING FISH**
FISCHZUCHTTANK ZUR ZÜCHTUNG VON LEBENDEN FISCHEN
RÉSERVOIR D'ÉLEVAGE DE POISSONS POUR CULTIVER DES POISSONS VIVANTS

(30) Priority: 19.12.2018 EP 18214005
(43) Date of publication of application: 27.10.2021
(73) Proprietor: Alfa Laval Corporate AB, 221 00 Lund (SE)
(72) Inventor: MILOVANOVIC, Milan, 5305 Florvåg, Bergen (NO)
(74) Representative: Alfa Laval Attorneys
(86) International application number: PCT/EP2019/085261
(87) International publication number: WO 2020/126988

(56) References cited:
- CN-A- 102 742 542
- CN-A- 107 155 966
- KR-B1- 101 507 052

## Description

### TECHNICAL FIELD

The disclosure relates to fish farming tanks for cultivating living fish, also known as aquafarming or pisciculture. The disclosure also relates to a method for generating a circulating flow of water in a fish farming tank for cultivating living fish.

### BACKGROUND ART

In the field of to fish farming tanks for cultivating living fish, there is a continuous demand for increasing the quality and productivity of fish farming. Several aspects are relevant for accomplishing these targets, such as amount of fish compared with amount of water, water quality, nutrition availability, water oxygen level, water flow, etc. The design of the tank itself may influence and improve some of the above-identified quality aspects. The tank may for example assist in maintaining a high water quality, the correct water oxygen level and a desired water flow. For example, document CN107155966A shows a fish movement training experiment device, document CN102742542A shows a method and a device for water feeding and water draining of a rectangular cultivating pond of young panax, and document KR101507052B1 shows a water injection nozzle for generation of swirling flow.

However, despite the activities in the field, there is still room for improvements in terms of tank design and method for generating a desirable circulating flow of water in the tank.

### SUMMARY OF THE DISCLOSURE

This section provides a general summary of the disclosure, and is not a comprehensive disclosure of its full scope or all of its features.

A general object of the present disclosure is to provide a tank design and method for generating a circulating flow of water in the tank that enables increased quality and productivity of fish farming. In particular, an object of the present disclosure is to provide a tank design and method for generating a more uniform and laminar circulating flow of water in the entire volume of the tank.

This and other objects, which will become apparent in the following, are accomplished by a fish farming tank and a method for generating a circulating flow of water in a fish farming tank as defined in the accompanying independent claims.

According to a first aspect of the invention defined in claim 1, there is provided a fish farming tank for cultivating living fish. The tank comprises a bottom wall and a side wall defining an internal volume for holding water up to a maximal water fill level and an active flow control system for generating a circulating flow of water within the tank. The active flow control system has a first water inlet arrangement for injecting water into the internal volume and a first water outlet arrangement for removing water from the internal volume. The first water inlet arrangement is configured for injecting water over more than 50%, specifically over more than 70%, and more specifically over more than 80%, of a maximal depth stretching from an interior surface of the bottom to the maximal water fill level. The first water outlet arrangement is configured for sucking water over more than 50%, specifically over more than 70%, and more specifically over more than 80%, of the maximal depth. Thereby the first water inlet arrangement spans or covers more than 50%, specifically more than 70%, and more specifically more than 80%, of the maximal depth. Thereby the first water outlet arrangement spans or covers more than 50%, specifically more than 70%, and more specifically more than 80%, of the maximal depth.

According to a second aspect of the Z invention defined in claim 14, there is provided a method for generating a circulating flow of water in a fish farming tank for cultivating living fish. The method comprises a first step of providing a tank having a bottom and a side wall defining an internal volume; a second step of filling the tank with water up to a water fill level, and a third step of operating an active flow control system for generating a circulating flow of water within the tank. The active flow control system has a first water inlet arrangement for injecting water into the internal volume and a first water outlet arrangement for removing water from the internal volume, and the first water inlet arrangement is configured for injecting water over more than 60%, specifically over more than 70%, and more specifically over more than 80% of the water depth stretching from an interior surface of the bottom to the water fill level. The first water outlet arrangement (6a) is configured for sucking water over more than 60%, specifically over more than 70%, and more specifically over more than 80%, of the water depth. Thereby the first water inlet arrangement spans or covers more than 60%, specifically more than 70%, and more specifically more than 80% of the water depth. Thereby the second water inlet arrangement spans or covers more than 60%, specifically more than 70%, and more specifically more than 80% of the water depth.

The active flow control system is configured for providing circulating flow of water within the tank for the purpose of ensuring good and equal water quality throughout the whole water volume of the tank. By removing regions with poor and uneven flow circulation, water quality may be improved and the whole volume of the tank can be better utilised, such that an overall better cost-efficiency of the fish farming activity may be accomplished.

In addition, by providing a more laminar water flow circulation throughout the whole water volume of the tank the fish population within the tank is generally more physically active due to less possibility of resting in a calm area without flow, and said increased level of physical activity typically has a positive effect on fish health and quality.

Poor water quality regions in the tank may for example ensue in regions with poor circulation, e.g. regions with still standing water or stationary whirling water, because these type of regions typically does not receive oxygen and nutrition added to the tank, and refuse substances may accumulate and being poorly removed. In other words, uneaten food and fish faeces accumulate in those poor circulation regions, due to small water flow velocity, creating positive environment for bacterial growth. The tank according to the invention solves this problem by providing an active flow control system that removes regions with poor water circulation and evens out the water flow throughout the whole water volume that is fish living habitat.

A more uniform and laminar circulating flow of water in the vertical direction of the tank efficiently avoids occurrence of still standing water regions, and by having the first water inlet arrangement configured for injecting water over more than 50% of a maximal depth stretching from an interior surface of the bottom to the maximal water fill level, the desired improvement in terms of uniform and laminar circulating flow of water in the whole volume of the tank is at least partly accomplished.

In particular, by injecting water over a significant span in the vertical direction of the tank less vertical water flow within the tank is accomplished, thereby contributing to the improved uniform and laminar flow throughout the entire tank.

In other words, a more uniform and laminar circulating flow in the whole tank volume may be accomplished by injecting water in more gentle way. This may for example be achieved by increasing the area of the inlet openings in vertical direction. In particular, by increasing the area of the water inlet openings, velocity at the water inlet openings goes down assuming constant mass flow. That will locally effect the flow in the way of vortex reduction and more efficient energy transfer. By spreading the area of the water inlet openings in vertical direction, a more even flow is achieved between layers along the water depth.

Moreover, a circulating water flow with a more equal flow velocity throughout the tank contributes to a reduced risk for flow separation within the tank, wherein flow separation typically results in turbulence and whirl in the area after the location of the flow separation.

The desired improved uniform and laminar flow throughout the entire tank means a more equal flow rate and flow direction over the vertical length of the tank, at any horizontal position of the tank. Furthermore, said improved uniform and laminar flow throughout the entire tank may additionally mean a more equal flow rate and flow direction over a radial length of the tank, at any given depth of the tank.

Further advantages are achieved by implementing one or several of the features of the dependent claims.

In a further example embodiment, the first water inlet arrangement has one elongated inlet opening or a plurality of inlet openings for injecting water into the internal volume. The one or plurality of inlet openings may define an outer border of a water inlet region. The water inlet region may extend in a vertical direction over more than 50%, specifically 65%, and more specifically 80% of the maximal depth. It is thus the one or more inlet openings that define the area of injected water, and increased vertical span of injected water into the tank generally leads to a more uniform and laminar circulating flow of water within the tank. Also, thereby the water inlet region spans or covers in a vertical direction more than 50%, specifically 65%, and more specifically 80% of the maximal depth.

In still a further example embodiment, said outer border of said water inlet region is defined only by those inlet openings of the first water inlet arrangement forming a cluster having a vertical distance between neighbouring inlet openings of the first water inlet arrangement smaller than 3 metres or 40% of the maximal depth, specifically smaller than 1.5 metres or 25% of the maximal depth, and more specifically smaller than 0.5 metre or 10% of the maximal depth, and a horizontal distance between neighbouring inlet openings of the first water inlet arrangement smaller than 10 metres or 75% of a maximal interior horizontal length of the tank, specifically smaller than 5 metres or 40% of a maximal interior horizontal length of the tank, and more specifically smaller than 2 metres or 20% of a maximal interior horizontal length of the tank. Water inlet openings located too far away from the cluster of inlet openings are not deemed being able to contribute sufficiently to the cluster of inlet openings for being deemed part of said cluster and its task of providing a more uniform and laminar circulating flow of water within the tank.

In a further example embodiment, the active flow control system further comprises a pump having a pump outlet connected to the first water inlet arrangement via a water inlet pipe for supplying pressurized water to the first water inlet arrangement, wherein the active flow control system is configured such that a flow rate of the water injected at any two locations of the one elongated inlet opening, or at any two inlet openings of the plurality of inlet openings, of the first water inlet arrangement do not differ more than 40%, specifically 30%, and more specifically 20%. A certain level of harmonisation of injected water flow rate between the various inlet openings facilitates generation of a more uniform and laminar circulating flow of water within the tank.

In another example embodiment, the first water inlet arrangement is configured for injecting water in a direction substantially parallel with a horizontal plane of the tank. Vertical water flow components within the tank is largely inconsistent with a uniform and laminar circulating flow of water within the tank. Hence, by having the first water inlet arrangement being configured for injecting water in horizontal plane, a more uniform and laminar circulating flow of water within the tank is accomplished.

In yet a further example embodiment, the one elongated inlet opening, or each of the plurality of inlet openings, of the first water inlet arrangement is configured for injecting water in a direction substantially tangential or parallel to the side wall at a location of said one elongated inlet opening, or at the location of each of said plurality of inlet openings, respectively. The orientation of the inlet openings such that water is injecting in a direction substantially tangential or parallel to the side wall contributes to a more uniform and laminar circulating flow of water within the tank, because the circulating flow of water within the tank typically flows in a direction substantially tangential or parallel to the side wall. Hence, thereby injected water is aligned with already existing circular flow of water.

According to a further example embodiment, the one or plurality of inlet openings of the first water inlet arrangement are located at the side wall of the tank. This enables injection of water into the tank without having flow blocking injection nozzles placed within a more central area of the circulating flow.

According to still a further example embodiment, the one or plurality of inlet openings of the first water inlet arrangement extends or are arranged primarily in a vertical direction. Since injection of water into the tank over a relatively large vertical span is desired, arranging the one or more inlet openings in the vertical direction is a cost-efficient solution because supply of water to the water inlet openings can be made more compact and less distributed in the horizontal direction.

As mentioned above, the first water outlet arrangement is configured for sucking water over more than 50%, specifically over more than 70%, and more specifically over more than 80%, of the maximal depth. Having also the water outlet arrangement operating by sucking water of a large vertical span the vertical water flow components within the circulating flow is reduced, thereby contributing to a more uniform and laminar flow of water. Thereby the first water outlet arrangement spans or covers more than 50%, specifically more than 70%, and more specifically more than 80%, of the maximal depth. Moreover, increased vertical span of emptied water out from the tank generally leads to a more uniform and laminar circulating flow of water within the tank. By having both the water inlet arrangement injecting water over a large vertical span and the water outlet arrangement sucking water over a large vertical span, the water inlet and outlet arrangements cooperate such that a more uniform and laminar flow is obtained. This is achieved since less flow and movement in the vertical direction is created when there is a large spread of both the inlet and outlet flow, whereby the water does not need to be transported in the vertical direction to a specific limited outlet that either may be located in an upper region, a lower region or an intermediate region of the tank.

According to an additional example embodiment, the first water inlet arrangement is configured for injecting water and the first water outlet arrangement is configured for sucking water over substantially the same length of the maximal depth, more precisely over the same vertical length of the maximal depth. This may alternatively be formulated as that the first water inlet arrangement is configured for injecting water over substantially the same length of the maximal depth as the first water outlet arrangement is configured for sucking water over. Thereby, a more uniform and laminar circulating flow is obtained. By injecting and sucking over the same length of the maximal depth, the transport of water in the vertical direction is reduced. A portion of water injected at a certain level can principally stay at the same level during circular flow and be sucked out at principally the same level as injected, which reduces turbulence.

According to a further example embodiment, the first water outlet arrangement has one elongated outlet opening or a plurality of outlet openings for sucking water from the internal volume. The one or plurality of outlet openings may define an outer border of a water outlet region. The water outlet region may extend in a vertical direction over more than 50%, specifically 65%, and more specifically 80% of the maximal depth. It is thus the one or more outlet openings that define the area of water outlet region, and increased vertical span of water outlet out from the tank generally leads to a more uniform and laminar circulating flow of water within the tank. Also, thereby the water outlet region spans or covers in a vertical direction more than 50%, specifically 65%, and more specifically 80% of the maximal depth.

According to one example embodiment, the one or plurality of inlet openings and the one or plurality of outlet openings have substantially the same vertical extension, more specifically in relation to the maximal water fill level. Vertical extension means an extension in the vertical direction. Thereby, a more uniform and laminar circulating flow is obtained. By having the same vertical extension for the inlet and outlet openings, the transport of water in the vertical direction is reduced leading to a more uniform and laminar flow. That the one or plurality of inlet openings and the one or plurality of outlet openings have substantially the same vertical extensions means that the one or plurality of inlet openings and the one or plurality of outlet openings are arranged on substantially the same level in relation to the maximal water fill level, or in other words are arranged on substantially the same distance from the maximal water fill level. The one or plurality of inlet openings and the one or plurality of outlet openings are then arranged on substantially the same horizontal level.

According to a further example embodiment, the water inlet region and the water outlet region have the same vertical extension, i.e. the same extension in the vertical direction. This achieves a more uniform and laminar flow. The water inlet region and the water outlet region may be arranged on substantially the same level, e.g. the same horizontal level, in relation to the maximal water fill level, or in other words may be arranged on substantially the same distance from the maximal water fill level.

In yet a further example embodiment, said outer border of said water outlet region is defined only by those outlet openings of the first water outlet arrangement forming a cluster having a vertical distance between neighbouring outlet openings of the first water outlet arrangement smaller than 3 metres or 40% of the maximal depth, specifically smaller than 1.5 metres or 25% of the maximal depth, and more specifically smaller than 0.5 metre or 10% of the maximal depth, and a horizontal distance between neighbouring outlet openings of the first water outlet arrangement smaller than 10 metres or 75% of a maximal interior horizontal length of the tank, specifically smaller than 5 metres or 40% of a maximal interior horizontal length of the tank, and more specifically smaller than 2 metres or 20% of a maximal interior horizontal length of the tank. Water outlet openings located too far away from the cluster of outlet openings are not deemed being able to contribute sufficiently to the cluster of outlet openings for being deemed part of said cluster and its task of providing a more uniform and laminar circulating flow of water within the tank.

In still a further example embodiment, the one or plurality of outlet openings of the first water outlet arrangement are located at a central location of the tank. This enables suction of water from the tank without having flow blocking outlet openings placed within the flow stream of the circulating flow, and by placing the outlet member at a central location water may flow in a spiral fashion towards the outlet member.

According to another example embodiment, the one or plurality of outlet openings of the first water outlet arrangement are located at an outer curved surface of an outlet member positioned at a central location of the tank. The curved surface contributes to a more uniform and laminar circulating flow of water around the outlet member.

According to a further example embodiment, water injected into the tank via the first water inlet arrangement located at the side wall of the tank is arranged to circulate within the tank around a vertical axis in a spiral fashion while approaching the centrally arranged first water outlet arrangement. The spiral flow of water from the inlet openings to the outlet openings contributes to a uniform and laminar flow of water from the inlet to the outlet openings.

In a further example embodiment, the tank has a circular, oval, square or rectangular overall shape, as seen from above. These tank designs are deemed enabling a cost-efficient manufacturing and operation of the fish farming tank for cultivating living fish.

In yet a further example embodiment, the active flow control system has two, three, four, five, six, or more water inlet arrangements located distributed around the periphery of the side wall for injecting water into the internal volume. Increased number of distributed water inlet arrangements generally lead to increased uniform and laminar flow because each water inlet arrangement may then operate with a lower water injection flow rate with maintained total water injection flow rate, and because smaller horizontal distance between consecutive water inlet arrangements provides a more equal and continuous flow rate throughout the volume of the tank.

In still a further example embodiment, the tank has a square or rectangular overall shape, as seen from above, and wherein the active flow control system has one water inlet arrangement for injecting water into the internal volume located at each corner of tank, as seen from above. The corners of a square or rectangular tank generally suffers from poor water quality due to reduced water flow rate, turbulence and increased accumulation of refuse substances. However, by injecting water into the internal volume located at each corner of tank, said poor water quality in the corners is removed.

Further features of, and advantages with, the present disclosure will become apparent when studying the appended claims and the following description. The skilled person realize that different features of the present disclosure may be combined to create embodiments other than those described in the following, without departing from the scope of the present disclosure.

### BRIEF DESCRIPTION OF THE DRAWINGS

The various example embodiments of the disclosure, including its particular features and example advantages, will be readily understood from the following illustrative and non-limiting detailed description and the accompanying drawings, in which:
Figures 1a-1c show different views of a first example embodiment of a fish tank according to the disclosure,
Figure 2 shows a 3D-view of a fish tank according to an alternative example embodiment,
Figure 3a-3b show different views of a square-shaped fish tank,
Figure 4 shows a top view of a rectangular-shaped fish tank,
Figures 5a-5d show various embodiments of the first water inlet arrangement,
Figures 6a-6d show various embodiments of the first water outlet arrangement,
Figures 7a-7e show various example embodiments of the first water inlet arrangement, as well as the resulting first water inlet region 79, and
Figure 8 briefly describes the basic steps of a method according to the disclosure.

### DETAILED DESCRIPTION OF EXAMPLE EMBODIMENTS OF THE DISCLOSURE

The present disclosure will now be described more fully hereinafter with reference to the accompanying drawings, in which exemplary embodiments of the disclosure are shown. The disclosure may, however, be embodied in many different forms and should not be construed as limited to the embodiments set forth herein; rather, these embodiments are provided for thoroughness and completeness. Like reference characters refer to like elements throughout the description. The drawings are not necessarily to scale and certain features may be exaggerated in order to better illustrate and explain the exemplary embodiments of the present disclosure.

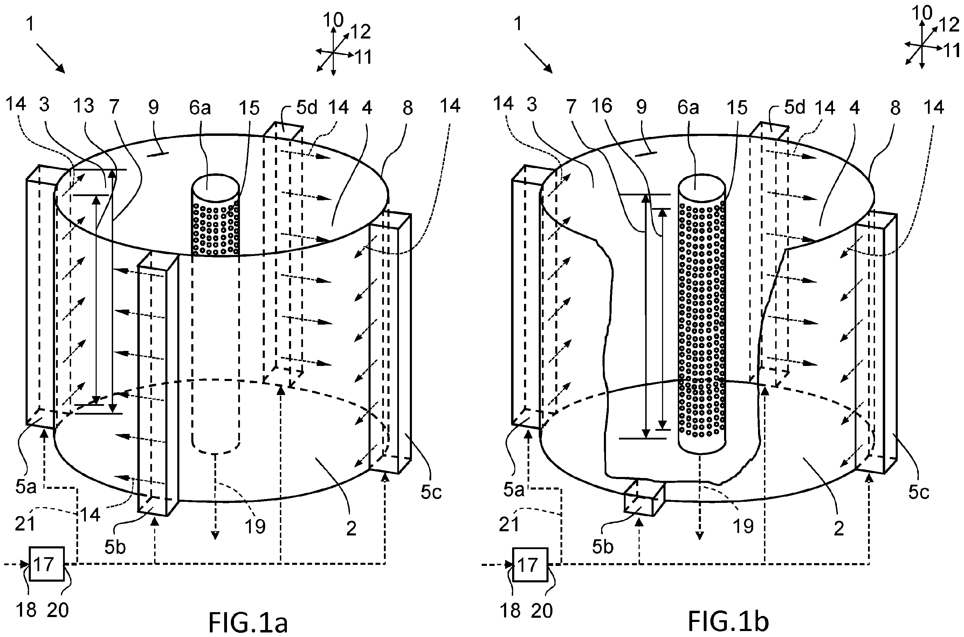

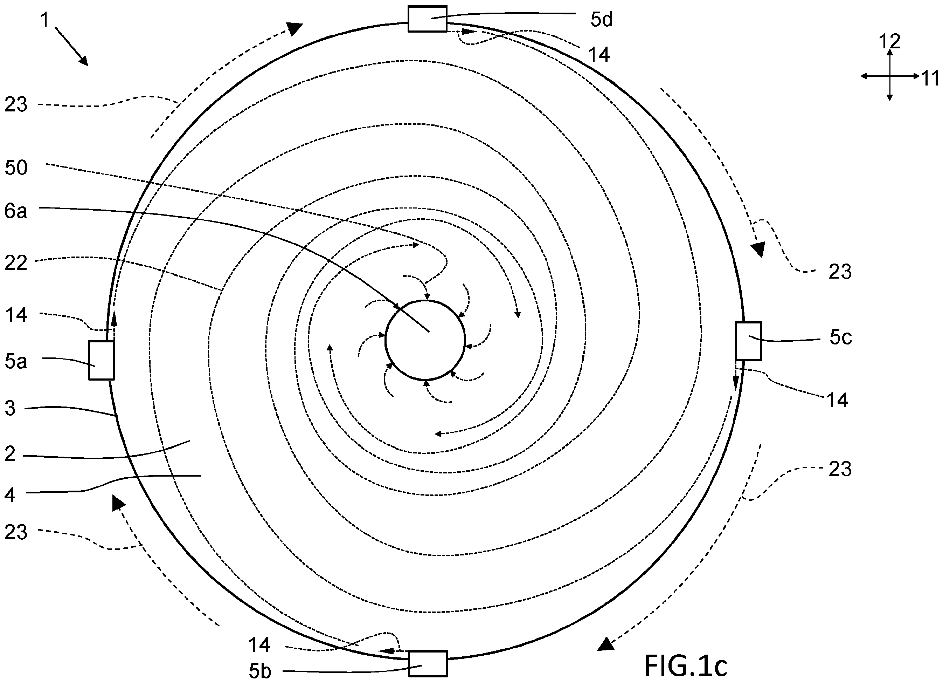

Figure 1a, 1b and 1c shows different views of a first embodiment of the fish farming tank 1 for cultivating living fish, wherein figure 1a shows a 3D view of the tank, figure 1b shows a cut-away view of the tank and figure 1c shows a top view of the tank.

Referring now to figure 1a, there is depicted a 3D-view of the fish farming tank 1. The tank 1 comprises a bottom wall 2 and a curved side wall 3 defining an internal volume 4 for holding water up to a maximal water fill level. Figure 1a further shows details of an active flow control system for generating a circulating flow of water within the tank.

In the example embodiment of figure 1a, the active flow control system has a first water inlet arrangement 5a for injecting water into the internal volume 4 and a first water outlet arrangement 6a for removing water from the internal volume 4. Moreover, the first water inlet arrangement 5a is configured for injecting water over a length 13 that is more than half of a maximal depth 7 stretching from an interior surface of the bottom 2 to the maximal water fill level. In figure 1a the location and direction of injected water is illustrated be means of a water injection vector 14.

In the example embodiment of figure 1a, the first water inlet arrangement 5a is configured for injecting water over a length 13 that is about 90% of the maximal depth 7 stretching from an interior surface of the bottom 2 to the maximal water fill level. Increased water injection span in a vertical direction 10 generally results in improved circulating flow of water in terms of homogeneity and laminar flow. However, a 50% water injection span over the maximal depth 7 is deemed to provide a significant improvement in terms of increased quality and productivity of fish food production due to a more uniform and laminar circulating flow of water in the entire volume of the tank.

The first water inlet arrangement 5a is merely schematically illustrated in figure 1a but it extends in the vertical direction 10 typically over a significant portion of the tank 1 for enabling injection of water over more than half of a maximal depth 7 stretching from an interior surface of the bottom 2 to the maximal water fill level. The first water inlet arrangement 5a has one or a plurality of inlet openings for injecting water into the internal volume 4.

For example, the first water inlet arrangement 5a may have a single inlet opening stretching in the vertical direction 10. Such a single elongated opening may for example be provided by means of water inlet arrangement having an elongated slit, i.e. a long narrow opening defined by two straight and parallel lips.

Alternatively, the first water inlet arrangement 5a may have a plurality of inlet openings arranged to extend primarily in the vertical direction 10. In other words, a region defined by a plurality of inlet openings of the first water inlet arrangement 5a may have a vertical length that is larger, specifically three times larger, and more specifically six times larger, than a horizontal length of said region defined by said plurality of inlet openings.

Each individual inlet opening of the plurality of inlet openings may have a circular shape, elongated vertical shape or any other type of shape.

The first water inlet arrangement 5a is configured for injecting water in a direction substantially parallel with a horizontal plane of the tank 1, wherein the horizontal plane is defined by a first horizontal direction 11 perpendicular to a second horizontal direction 12. Thereby, a vertical flow component of the water within the tank is kept low, such that a more uniform and laminar circulating flow can be accomplished in the whole internal volume 4 of the tank 1. The term substantially in this specific situation means within +/- 10 degrees, specifically +/- 5 degrees, from the horizontal plane.

The one elongated inlet opening, or each of the plurality of inlet openings, of the first water inlet arrangement 5a is further configured for injecting water in a direction substantially tangential to the side wall 3 at a location of said one elongated inlet opening, or at the location of each of said plurality of inlet openings, respectively. The term substantially in this specific situation means within +/- 25 degrees, specifically +/-10 degrees.

In the example embodiment of the tank 1 illustrated in figures 1a-1c, the one or plurality of inlet openings of the first water inlet arrangement 5a are located at the side wall 3 of the tank 1. Depending on the desired flow direction of the water flow exiting the one or plurality of inlet openings the first water inlet arrangement 5a may project slightly radially inwards from the interior surface of the side wall 3, for example when the first water inlet arrangement 5a is configured for injecting water in a direction substantially tangential to an interior surface of the side wall at a location of the first water inlet arrangement. However, the first water inlet arrangement 5a does preferably not protrude any significant distance from the side wall 3 into the internal volume 4, thereby reducing amount of stationary objects that may hinder the desired laminar circulating flow of water or cause turbulence.

The maximal water fill level of the tank 1 of figure 1a may for example be represented by an overflow level of the tank 1. The overflow level may for example be defined by a specifically provided overflow outlet, which for example may be provided in the side wall 3 of the tank 1. Alternatively, the overflow level may for example simply be defined by the water level at which water begins to flow over the upper edge 8 of the side wall 3. Still more alternatively, the maximal water fill level of the tank 1 of figure 1a may for example be represented be a specific fill level marking 9 indicating an intended maximal water fill level.

The active flow control system of the tank 1 illustrated in figure 1a-1c further comprises a second, a third and a fourth water inlet arrangement 5b, 5c, 5d, i.e. a total of four water inlet arrangements 5a-5d. Each of these water inlet arrangements 5a-5d may have the same design and functionality, such as those described above with reference to the first water inlet arrangement 5a.

In principle, the active flow control system may include any number of water inlet arrangements, such as for example two, three, four, five, six, or more, depending on the size and form of the tank 1 and the desired flow rate.

In the example embodiment of the tank 1 showed in figures 1a-1c, the first to fourth water inlet arrangements 5a-5d are located distributed substantially equally around the periphery of the side wall 3. However, in other tank designs, the water inlet arrangements 5a-5d may be distributed unequally around the periphery, such as for example in a rectangular or oval tank.

The first water outlet arrangement 6a is more clearly illustrated in figure 1b, which schematically depicts the tank 1 of figure 1a in a cut-away view. The first water outlet arrangement 6a is here designed as a cylindrical outlet member located at a central location of the tank 1 and with a plurality of outlet openings 15 arranged at the outer surface of the cylindrical outlet member.

In the example embodiment of figures 1a and 1b the plurality of outlet openings 15 are located around substantially the entire periphery of the cylindrical outlet member for reducing level of turbulence in the region adjacent the outlet openings 15, thereby enabling a more uniform and laminar flow of water within the tank 1.

Moreover, the plurality of outlet openings 15 are positioned and configured for sucking water over a vertical length 16 that is more than half of the maximal depth 7. In the example embodiment of figures 1a-1c the first water outlet arrangement 6a is configured for sucking water over a length 16 that is about 90% of the maximal depth 7 stretching from an interior surface of the bottom 2 to the maximal water fill level. Increased water suction span in a vertical direction 10 generally results in improved circulating flow of water in terms of homogeneity and laminar flow because water within the tank 1 can be emptied with reduced level of vertical flow component. However, a 50% water suction span over the maximal depth 7 is deemed to provide a significant improvement in terms of increased quality and productivity of fish food production due to a more uniform and laminar circulating flow of water in the entire volume of the tank.

The first water inlet arrangement 5a is configured for injecting water and the first water outlet arrangement 6a is configured for sucking water over substantially the same length of the maximal depth 7, more precisely over the same vertical length of the maximal depth 7. In other words, the first water inlet arrangement 5a is configured for injecting water over substantially the same length of the maximal depth 7 as the first water outlet arrangement 6a is configured for sucking water over. Preferably, the first water inlet arrangement 5a as well as further water inlet arrangement(s) 5b-5d are configured for injecting water and the first water outlet arrangement 6a is configured for sucking water over substantially the same length of the maximal depth 7, more precisely over the same vertical length of the maximal depth 7.

The first water outlet arrangement 6a may have various configurations. For example, the first water outlet arrangement 6a may have a single elongated outlet opening, or a plurality of outlet openings, extending primarily in the vertical direction. In other words, the single elongated outlet opening, or a region defined by a plurality of outlet openings, of the first water outlet arrangement 6a has a vertical length that is larger, specifically three times larger, and more specifically six times larger, than a horizontal length of said single elongated outlet opening or said region defined by said plurality of outlet openings.

Moreover, there may be a single outlet member, as illustrated in fig. 1a and 1b, or a plurality of outlet members, and the one or more outlet members may have a rectangular, curved, oval or circular outer surface, or the like.

The one or plurality of inlet openings and the one or plurality of outlet openings have substantially the same vertical extension, more specifically in relation to the maximal water fill level. The one or plurality of inlet openings and the one or plurality of outlet openings are arranged on substantially the same level in relation to the maximal water fill level, or in other words are arranged on substantially the same distance from the maximal water fill level. The one or plurality of inlet openings and the one or plurality of outlet openings are arranged on substantially the same horizontal level.

As schematically illustrated in figure 1a and 1b, the active flow control system further comprises a pump 17 having a pump outlet 20 connected to the first water inlet arrangement 5a via a water inlet pipe 21 for supplying pressurized water to the first water inlet arrangement 5a. In fact, in the example embodiment of figure 1a and 1b, the pump outlet 20 is connected also the second, third and fourth water inlet arrangements 5b, 5c, 5d via individual water inlet pipes for supplying pressurized water also to the second, third and fourth water inlet arrangements 5b, 5c, 5d.

Fresh water from a fresh water source, such as the sea, lake, river, pond or the like, may be supplied to a pump inlet 18 and further supplied to the tank 1 by means of the pump 17. A water outlet pipe 19 may be connected to the first water outlet arrangement 6a of the tank 1 for outflow of water from the tank 1. The outflow of water may be a natural outflow caused by gravitation, and/or forced outflow caused by a pump (not showed) connected to the water outlet pipe 19.

According to an alternative embodiment, the pump inlet 18 may be connected to the first water outlet arrangement 6a, for example via a filter and/or a water cleaning device and/or a water conditioning device, and subsequently returning the cleaned and conditioned water to the tank 1 via the pump 17 and the water inlet pipe 21, such that a closed water flow circulation system is provided.

The active flow control system is configured such that a flow rate of the water injected at any two locations of the one elongated inlet opening, or at any two inlet openings of the plurality of inlet openings, of the first water inlet arrangement 5a do not differ more than 40%, specifically 30%, and more specifically 20%. Said flow rate of the water injected at any two locations of the one elongated inlet opening, or at any two inlet openings of the plurality of inlet openings, of the first water inlet arrangement 5a are in fact preferably equally large. Thereby it is avoided that water is injected with for example twice the flow rate at for example an inlet opening the lower end of the first water inlet arrangement 5a compared with a flow rate at an inlet opening the upper end of the first water inlet arrangement 5a, or that water is injected with for example twice the flow rate at for example an upper location of the elongated inlet opening compared with a flow rate at a lower location of the elongated inlet opening of the first water inlet arrangement 5a. The same preferably applies also to each of the second, third and fourth water inlet arrangements 5b-5d.

Moreover, in a tank 1 having a plurality of water inlet arrangements, such as shown in figure 1a -1c, the active flow control system may be configured such that a flow rate of the water injected at the plurality of water inlet arrangements 5a-5d of the active flow control system do not differ more than 40%, specifically 30%, and more specifically 20%, between any inlet openings of the plurality of water inlet arrangements. Said flow rate of the water injected at any two locations of the plurality of water inlet arrangements are in fact preferably equally large. Thereby is ensured that the water injection flow rate does not vary too much between the plurality of water inlet arrangements 5a-5d, such that a more uniform and laminar circulating water flow may be accomplished.

Figure 1c schematically illustrates a top view of the tank of the example embodiment of figure 1a and 1b. The side wall 3 of the tank has a curved and circular overall shape, as seen from above. Moreover, the first to fourth water inlet arrangements 5a-5d are equally distributed around the periphery of the side wall 3 of the tank 1.

The direction of injected water 14 from each of the plurality of inlet openings of each of the water inlet arrangements 5a-5d is substantially tangential to the interior surface of the side wall 3 at the location of each of said plurality of inlet openings of each water inlet arrangement 5a-5d, respectively. Moreover, the direction of the injected water 14 from each water inlet arrangement 5a-5d is oriented along a common rotational motion 23 for contributing to an intended circulating flow 22 of water within the tank 1.

In other words, in figure 1c water injected into the tank 1 via the first to fourth water inlet arrangements 5a-5d located at the side wall 3 of the tank is arranged to contribute to a circulating flow 22 of water within the tank around a vertical axis. Moreover, since the first water outlet arrangement 6a is located in a central region of the tank 1, as seen from the top of the tank, water is arranged to flow in a spiral fashion from the periphery of the side wall 3 while approaching the centrally arranged first water outlet arrangement 6a.

Upon arriving at the first water outlet arrangement 6a the water can be emptied from the tank via the plurality of outlet openings 15 that are located around substantially the entire periphery of the cylindrical outlet member. Outlet flow of water from the tank is illustrated by curved water outflow vectors 50 in figure 1c.

That the water inlet arrangement is configured for injecting water over a certain portion, such as more than half or a certain percentage, of the maximal depth implies that the water inlet arrangement spans or covers said certain portion. The water inlet arrangement is configured for injecting water over a length corresponding to said portion. In particular, the water inlet arrangement is configured for injecting water over a length that is more than half or a certain percentage, such as more than 50%, more than 70%, more than 80% or about 90%, of the maximal depth. That the water outlet arrangement is configured for sucking water over a certain portion, such as more than half or a certain percentage, of the maximal depth implies that the water outlet arrangement spans or covers said certain portion. The water outlet arrangement is configured for sucking water over a length corresponding to said portion. In particular, the water outlet arrangement is configured for sucking water over a length that is more than half or a certain percentage, such as more than 50%, more than 10%, more than 80% or about 90%, of the maximal depth. The water inlet arrangement is to be considered to be configured for injecting water over a certain portion of the maximal depth in a given moment. The water outlet arrangement is to be considered to be configured for sucking water over a certain portion of the maximal depth in a given moment.

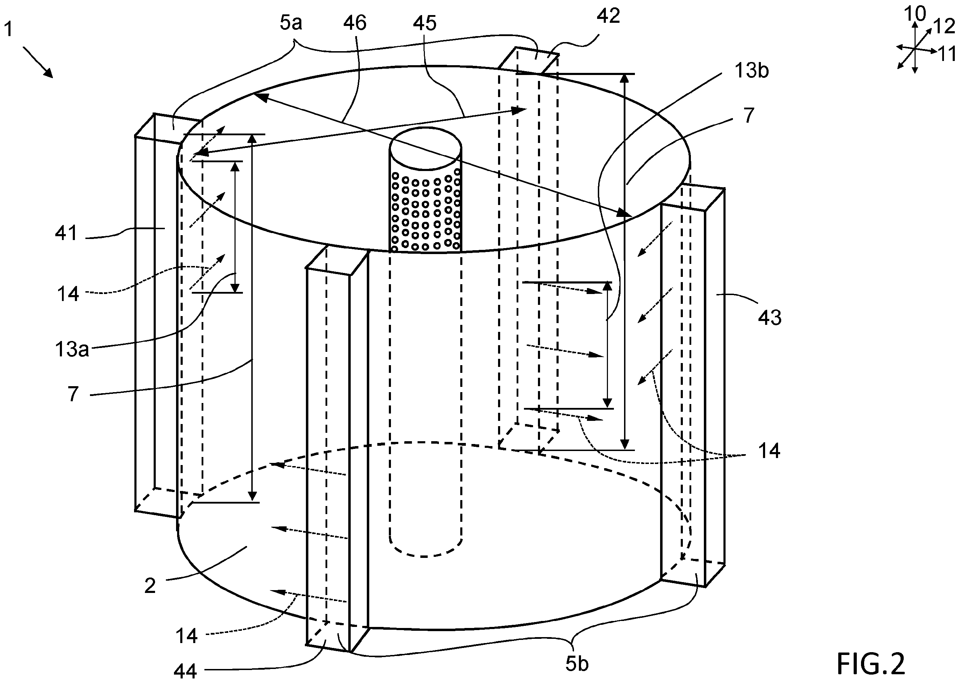

Figure 2 illustrates a schematic 3D view of an alternative example embodiment of the tank according to the disclosure. Depending on factors such as size and depth of the tank 1, the desired flow rate, etc., the first water inlet arrangement 5a may under certain conditions be more spread out in a horizontal direction 11, 12 while still providing satisfactory performance in terms of improved uniform and laminar flow throughout the entire tank.

For example, as shown in figure 2, the active flow control system comprises a first water inlet arrangement 5a and a second water inlet arrangement 5b. The first water inlet arrangement 5a includes a first part 41 and a second part 42, wherein the first and second parts 41, 42 are located spaced apart from each other in a horizontal direction, wherein each of the first and second parts 41, 42 has one or more inlet openings for injecting water into the tank 1, and wherein the inlet openings of the first part 41 are located in an upper area of the tank 1 while the inlet openings of the second part 42 are located in a lower area of the tank 1. Similarly, the second water inlet arrangement 5b includes a first part 43 and a second part 44, wherein the first and second parts 43, 44 are located spaced apart from each other in a horizontal direction, wherein each of the first and second parts 43, 44 has one or more inlet openings for injecting water into the tank 1, and wherein the inlet openings of the first part 43 are located in an upper area of the tank 1 while the inlet openings of the second part 44 are located in a lower area of the tank 1.

One of the most relevant aspects of the first water inlet arrangement for facilitating the improved performance in terms of increased uniform and laminar flow throughout the entire tank is the relative large vertical distance over which the first water inlet arrangement is configured to inject water, namely over more than half of a maximal depth.

However, a relatively high uniform and laminar flow within the tank enables increased horizontal distance between various inlet openings of the first water inlet arrangement without necessarily resulting in increased vertical flow component of the water.

This is the reason why the first water inlet arrangement 5a under certain conditions may be more spread out in a horizontal direction 11, 12 while still providing satisfactory performance in terms of improved uniform and laminar flow throughout the entire tank.

The horizontal distance between various inlet openings of the first water inlet arrangement may however also not become too large, because thereby the performance in terms of uniform and laminar flow throughout the entire tank would fall.

One approach for quantifying the level of horizontal spread out of inlet openings of the first water inlet arrangement and for defining limits that are deemed to provide satisfactory performance in terms of improved uniform and laminar flow throughout the entire tank is to set maximal distance between neighbouring inlet openings of the first water inlet arrangement in a horizontal direction.

For example, with reference to figure 2, the one or plurality of inlet openings of the first water inlet arrangement 5a define an outer border of a water inlet region, wherein said outer border of said water inlet region is defined only by those inlet openings of the first water inlet arrangement forming a cluster having a horizontal distance 45 between neighbouring inlet openings of the first water inlet arrangement 5a smaller than 10 metres or 75% of a maximal interior horizontal length 46 of the tank 1, specifically smaller than 5 metres or 40% of a maximal interior horizontal length 46 of the tank 1, and more specifically smaller than 2 metres or 20% of a maximal interior horizontal length 46 of the tank 1.

Moreover, as before, the first water inlet arrangement 5a is configured for injecting water over more than half of a maximal depth 7 stretching from an interior surface of the bottom 2 to the maximal water fill level. In the example embodiment of figure 2, the first water inlet arrangement 5a is configured for injecting water over a vertical length that is composed of two vertical sections, namely a first vertical section 13a of the first part 41 of the first water inlet arrangement 5a, and a section vertical section 13b of the second part 42 of the first water inlet arrangement 5a.

Hence, the accumulated lengths of the first and section vertical sections 13a, 13b is larger than half of a maximal depth 7 stretching from an interior surface of the bottom 2 to the maximal water fill level.

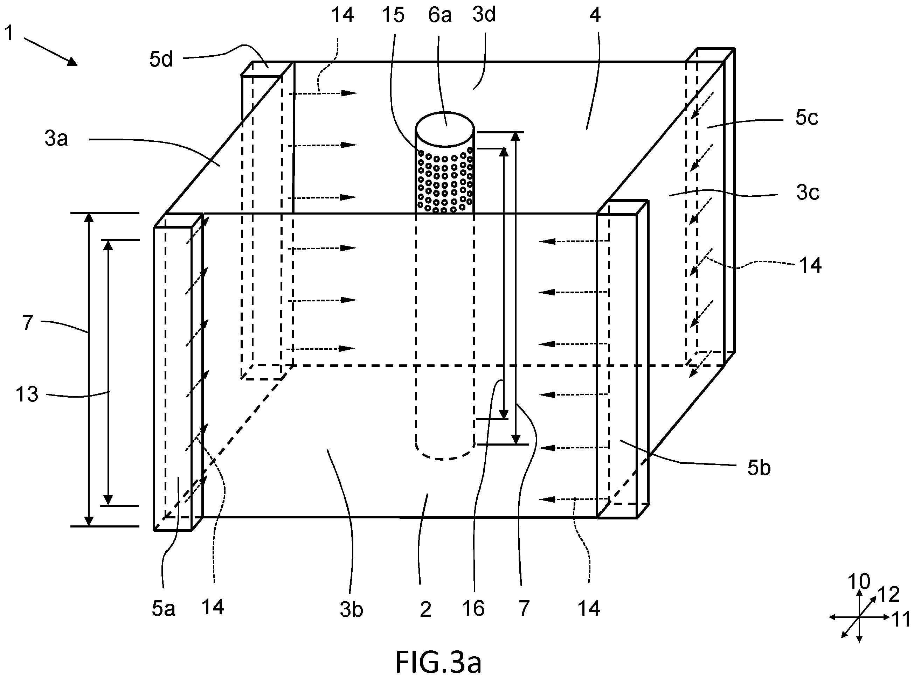

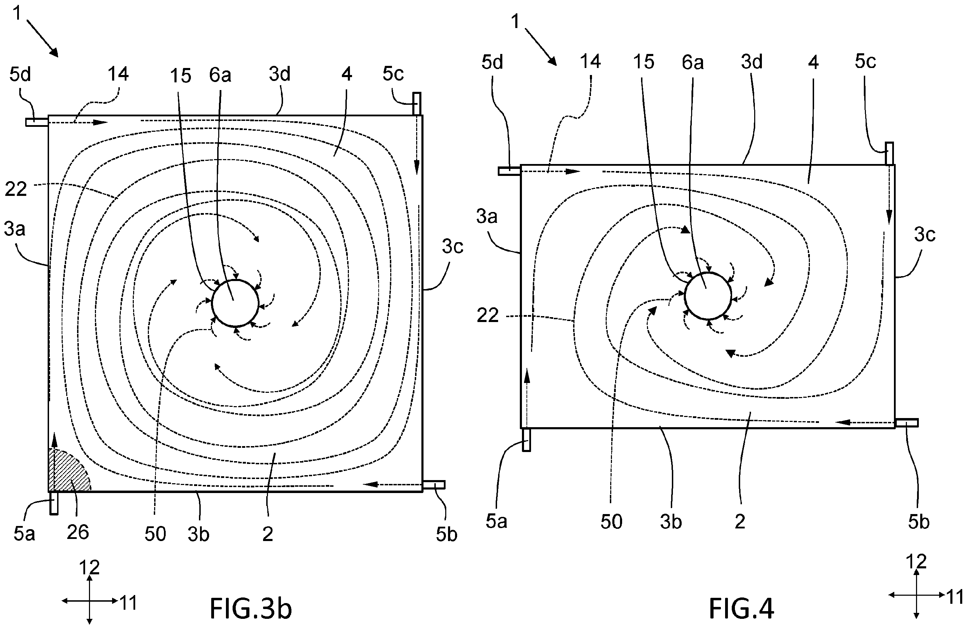

Figure 3a and 3b shows different views of a further example embodiment of the fish farming tank 1 for cultivating living fish. The fish farming tank according to this example embodiment is similar to the tank 1 of the first example embodiment in nearly all aspect, but having a substantially square shape instead of a circular.

More in detail, figure 3a shows a tank comprising a bottom 2 and four side walls 3a, 3b, 3c, 3d defining an internal volume 4 for holding water up to a maximal water fill level. Figure 3a further shows details of an active flow control system for generating a circulating flow of water within the tank 1. The active flow control system has a first water inlet arrangement 5a for injecting water into the internal volume 4 and a first water outlet arrangement 6a for removing water from the internal volume 4.

The active flow control system of the tank according to the specific example embodiment of figure 3a also shows a second, third and fourth water inlet arrangement 5b, 5c, 5d.

The first water inlet arrangement 5a is configured for injecting water over a vertical length 13 that is more than half of a maximal depth 7 stretching from an interior surface of the bottom 2 to the maximal water fill level.

In the example embodiment of figure 3a, the first water inlet arrangement 5a is configured for injecting water over a length 13 that is about 90% of the maximal depth 7 stretching from an interior surface of the bottom 2 to the maximal water fill level. Increased water injection span in a vertical direction 10 generally results in improved circulating flow of water in terms of homogeneity and laminar flow.

The first water outlet arrangement 6a is here designed as a substantially cylindrical outlet member located at a central location of the tank 1 and with a plurality of outlet openings 15 arranged at the outer surface of the cylindrical outlet member.

In the example embodiment of figure 3a the first water outlet arrangement 6a is configured for sucking water over a length 16 that is about 90% of the maximal depth 7 stretching from an interior surface of the bottom 2 to the maximal water fill level. Increased water suction span in a vertical direction 10 generally results in improved circulating flow of water in terms of homogeneity and laminar flow because water within the tank 1 can be emptied with reduced level of vertical flow component.

The first water inlet arrangement 5a is configured for injecting water and the first water outlet arrangement 6a is configured for sucking water over substantially the same length of the maximal depth 7, more precisely over the same vertical length of the maximal depth 7. In other words, the first water inlet arrangement 5a is configured for injecting water over substantially the same length of the maximal depth 7 as the first water outlet arrangement 6a is configured for sucking water over. Preferably, the first water inlet arrangement 5a as well as further water inlet arrangement(s) 5b-5d are configured for injecting water and the first water outlet arrangement 6a is configured for sucking water over substantially the same length of the maximal depth 7, more precisely over the same vertical length of the maximal depth 7.

The one or plurality of inlet openings and the one or plurality of outlet openings have substantially the same vertical extension, more specifically in relation to the maximal water fill level. The one or plurality of inlet openings and the one or plurality of outlet openings are arranged on substantially the same level in relation to the maximal water fill level, or in other words are arranged on substantially the same distance from the maximal water fill level. The one or plurality of inlet openings and the one or plurality of outlet openings are arranged on substantially the same horizontal level.

Figure 3b shows of top view of the tank 1 according to the example embodiment of figure 3a. The tank 1 has a square overall shape, as seen from above. Moreover, the first to fourth water inlet arrangements 5a-5d are located distributed around the periphery of the side walls 3a-3d in the corners of the square-shaped tank, as seen from above.

Each of the first to fourth water inlet arrangements 5a-5d may be located exactly in the corner of the tank or slightly displaced from the corner but within a corner region located centred around the exact corner. For example, as schematically illustrated in figure 3b, the first water inlet arrangement 5a may be located within a first corner region 26, which is defined by a circle centred at the exact corner and having a radius of about 1 metre, specifically 0.5 metre, or 10%, specifically 5%, of the length of the first side wall 3a in a horizontal plane.

Each of the first to fourth water inlet arrangements 5a-5d is configured for injecting water in a direction substantially parallel to the interior surface of the side wall 3a-3d at the location of the each respective water inlet arrangement 5a-5d. In detail, since the water inlet arrangements 5a-5d are located in the corners of the tank, each water inlet arrangement has two nearby side walls.

For example, the first water inlet arrangement 5a in figure 3b has a first side wall 3a and a second side wall 3b nearby, since the corner is fact defined by these two side walls 3a, 3b. In the example embodiment shown in figure 3b, the first water inlet arrangements 5a is configured for injecting water in a direction substantially parallel to the interior surface of the first side wall 3a.

The term substantially in this specific situation means within +/- 20 degrees, specifically +/-10 degrees, from the direction parallel to the interior surface of the side wall at a location of the first water inlet arrangement 5a.

Due to the direction of injected water 14 from each of the water inlet arrangements 5a-5d substantially parallel to the interior surface of one of the adjacent side walls 3a-3d at the location of each respective water inlet arrangement 5a-5d, and due to the direction of injected water 14 from each of the water inlet arrangements 5a-5d along a common rotational motion, water within the tank 1 will upon operation of the active flow control system exhibit a circulating flow 22 within the tank 1. Furthermore, since the first water outlet arrangement 6a is located in a central region of the tank 1, as seen from the top of the tank 1, water is arranged to flow in a spiral fashion from the periphery of the side wall 3a-3d while approaching the centrally arranged first water outlet arrangement 6a.

Upon arriving at the first water outlet arrangement 6a the water can be emptied from the tank via the plurality of outlet openings 15 that are located around substantially the entire periphery of the cylindrical outlet member.

Otherwise, all aspect are similar to those described above with reference to figure 1a -1c.

Figure 4 shows a top view of still a further example embodiment of the tank 1 according to the disclosure. The tank has a rectangular overall shape, as seen from above, and the first to fourth water inlet arrangements 5a-5d are located distributed around the periphery of the side walls 3a-3d in the corners of the rectangular-shaped tank, as seen from above. Otherwise, all aspect are similar to those described above with reference to any of figure 1a - 3b.

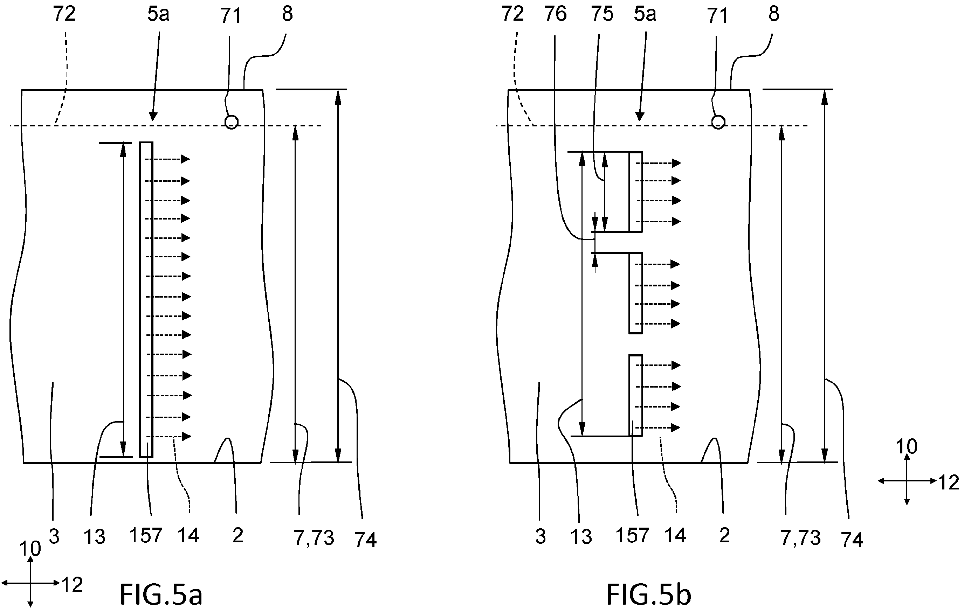

Figures 5a-5d shows various example embodiments of the interior vertical surface of the side wall 3 of the tank 1 in a region of the first water inlet arrangement 5a, such as for example the first water inlet arrangement 5a of figures 1a - 1c, in which the one elongated inlet opening, or each of the plurality of inlet openings, of the first water inlet arrangement 5a is configured for injecting water in a direction 14 substantially tangential to the curved side wall at a location of said one elongated inlet opening, or at the location of each of said plurality of inlet openings, respectively.

Consequently, figure 5a-5d further shows the bottom 2 of the tank 1, and the upper edge 8 of the side wall 3.

Furthermore, the one elongated inlet opening 157, or each of the plurality of inlet openings 57, of figures 5a-5d may for example be located in one or more inlet nozzles that protrude slightly into the tank 1 and being arranged to inject water in a direction 14 tangential to the interior curved and/or circular surface of the tank 1. Alternatively, the inlet nozzles with the inlet opening(s) may be positioned flush with the interior surface of the tank at a location of a small step or recess provided in the interior circular and/or curved surface of the tank, wherein the surface of the step of recess at the location of the inlet nozzle extends substantially in a plane coinciding with the vertical direction and passing through a centre of the tank 1.

The one or more inlet openings 157, 57 are arranged in vertical direction 10 over a length 13 that is at least 50% of a maximal depth 7 stretching from an interior surface of the bottom 2 to the maximal water fill level.

Only the first water inlet arrangement 5ais shown in each of figures 5a-5d, but all water inlet arrangements 5b-5d of the tank 1 typically have an identical layout.

The first water inlet arrangement 5a is configured for injecting water over a length 13 that is longer than 50% of the maximal depth 7 stretching from an interior surface of the bottom 2 to the maximal water fill level. Specifically, in the example of figure 5a, the first water inlet arrangement 5a is configured for injecting water over a length 13 that is about 90% of said maximal depth 7.

The first water inlet arrangement has a single elongated vertically arranged inlet opening 157, and the maximal water fill level determined by an overflow outlet 71 located in the side wall 3 of the tank 1. The water fill level 72 in the tank 1 cannot exceed the overflow outlet 71 and therefore the location of the overflow outlet 71 defines the maximal water fill level, and the vertical length 73 from an interior surface of the bottom 2 to the tank to the overflow outlet 71 equal the maximal depth 7.

According to an alternative embodiment, the maximal water fill level of the tank 1 could be defined by the water fill level 72 at which water start to flow over the upper edge 8 of the tank by an overflow level of the tank 1, meaning that the vertical length 74 from the interior surface of the bottom 2 to the upper edge 8 of the tank equals the maximal depth 7.

Figure 5b shows a further example embodiment of the interior vertical surface of the side wall 3 of the tank 1 in a region of the first water inlet arrangement 5a according to the disclosure. All aspects of the tank 1 of the embodiment of figure 5b is identical to the embodiment of figure 5a, except that the first water inlet arrangement 5a of the active flow control system has a different layout.

Specifically, the first water inlet arrangement 5a has three individual inlet openings 57, each of which has an elongated shape that extends in the vertical direction 10 over a certain vertical length 75. Moreover, the three individual inlet openings 57 are arranged aligned in a vertical direction with a vertical distance 76 between each neighbouring inlet opening 57.

The three individual inlet openings 57 jointly define an outer border of a water inlet region, which extends in a vertical direction over more than 50%, specifically 65%, and more specifically 80% of the maximal depth 7. In fact, the water inlet region defined by the inlet openings 57 in figure 5b extends in a vertical direction over a length 13 of about 90% of the maximal depth 7.

Moreover, said outer border of said water inlet region is defined only by those inlet openings 57 of the first water inlet arrangement 5a forming a cluster having a vertical distance between neighbouring inlet openings 57 of the first water inlet arrangement 5a smaller than 3 metres or 40% of the maximal depth 7, specifically smaller than 1.5 metres or 25% of the maximal depth 7, and more specifically smaller than 0.5 metre or 10% of the maximal depth 7, and a horizontal distance between neighbouring inlet openings 57 of the first water inlet arrangement 5a smaller than 10 metres or 75% of a maximal interior horizontal length 46 of the tank 1, specifically smaller than 5 metres or 40% of a maximal interior horizontal length 46 of the tank 1, and more specifically smaller than 2 metres or 20% of a maximal interior horizontal length 46 of the tank 1.

In the embodiment of figure 5b, all three individual inlet openings 57 define the water inlet region because the maximal vertical distance 76 between neighbouring inlet openings 57 is smaller than 40% of the maximal depth 7 and the horizontal distance between neighbouring inlet openings 57 of the first water inlet arrangement 5a is smaller than 75% of a maximal interior horizontal length 46 of the tank 1.

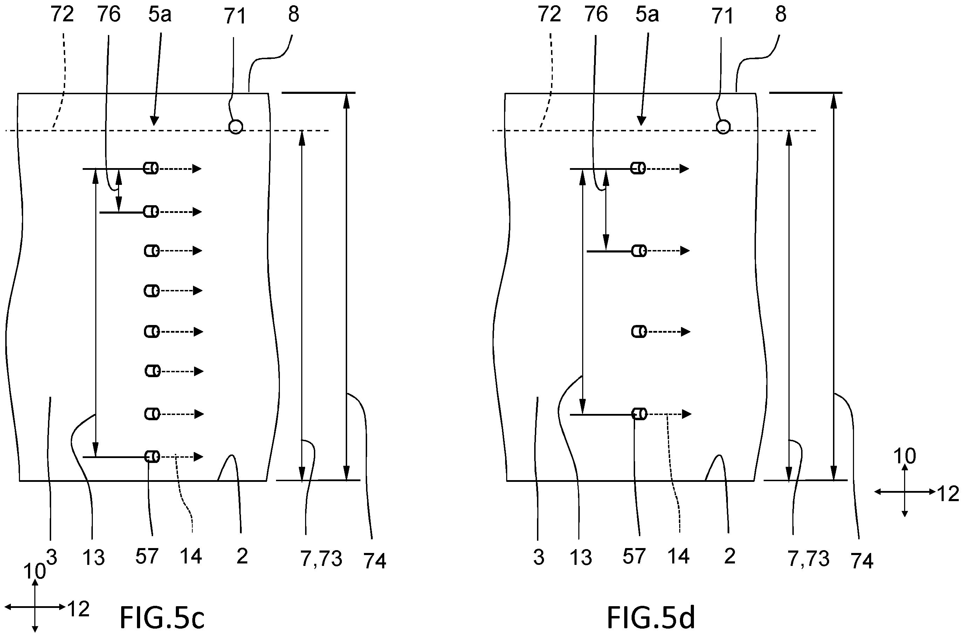

Figure 5c shows still a further example embodiment of the interior vertical surface of the side wall 3 of the tank 1 in a region of the first water inlet arrangement 5a according to the disclosure. All aspects of the tank 1 of the embodiment of figure 5c is identical to the embodiment of figure 5a, except that the first water inlet arrangement 5a of the active flow control system has a different layout.

Specifically, the first water inlet arrangement 5a has eight individual inlet openings 57, each of which is formed in an individual inlet nozzle. The eight individual inlet openings 57 are arranged aligned in a vertical direction 10 with a vertical distance 76 between each neighbouring inlet opening 57.

The eight individual inlet openings 57 jointly define an outer border of a water inlet region, which extends in a vertical direction over more than 50%, specifically 65%, and more specifically 80% of the maximal depth 7. In fact, the water inlet region defined jointly by the inlet openings 57 in figure 5c extends in a vertical direction over a length 13 of about 90% of the maximal depth 7.

All eight individual inlet openings 57 define the water inlet region because the maximal vertical distance 76 between neighbouring inlet openings 57 is smaller than 40% of the maximal depth 7 and the horizontal distance between neighbouring inlet openings 57 of the first water inlet arrangement 5a is smaller than 75% of a maximal interior horizontal length 46 of the tank 1.

Figure 5d shows still a further example embodiment of the interior vertical surface of the side wall 3 of the tank 1 in a region of the first water inlet arrangement 5a according to the disclosure. All aspects of the tank 1 of the embodiment of figure 13 are identical to the embodiment of figure 10, except that the first water inlet arrangement 5a of the active flow control system have a different layout.

Specifically, the first water inlet arrangement 5a has four individual inlet openings 57, each of which is formed in an individual inlet nozzle. The four individual inlet openings 57 are arranged aligned in a vertical direction 10 with a vertical distance 76 between each neighbouring inlet openings 57.

The four individual inlet openings 57 jointly define an outer border of a water inlet region, which extends in a vertical direction over more than 50%, specifically 65%, and more specifically 80% of the maximal depth 7. In fact, the water inlet region defined jointly by the four inlet openings 57 in figure 5d extends in a vertical direction over a length 13 of about 70% of the maximal depth 7.

All four individual inlet openings 57 define the water inlet region because the maximal vertical distance 76 between neighbouring inlet openings 57 is smaller than 40% of the maximal depth 7 and the horizontal distance between neighbouring inlet openings 57 of the first water inlet arrangement 5a is smaller than 75% of a maximal interior horizontal length 46 of the tank 1.

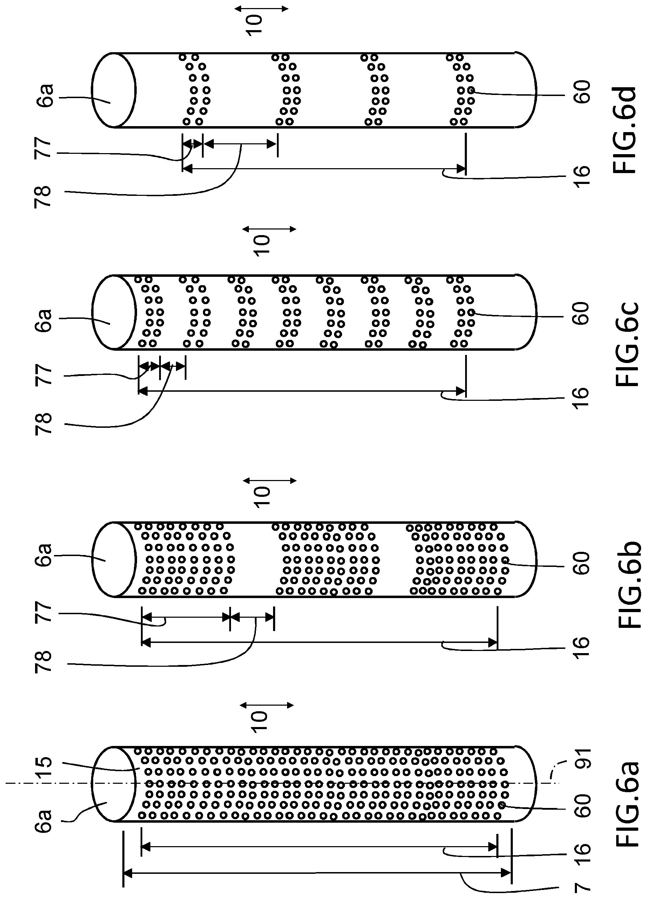

Figures 6a-6d shows various example embodiments of the first water outlet arrangement 6a of the tank 1, such as for example the first water outlet arrangement 6a of figures 1a - 1c, 2, 3a-3b and 4.

Hence, in this example embodiment, the first water outlet arrangement 6a comprises a cylindrical outlet member standing on the bottom surface 2 of the tank 1 and being oriented with its longitudinal axis parallel with the vertical direction 10, and having a plurality of outlet openings 15 arranged at the outer cylindrical surface of the cylindrical outlet member.

In the example embodiment of figure 6a, the first water outlet arrangement 6a is configured for sucking water over a length 16 that is more than 50% of the maximal depth 7 of the tank 1.

In fact, in the example embodiment illustrated in figure 6a, the first water outlet arrangement 6a is configured for sucking water over a length 16 that is about 90% of the maximal depth 7 stretching from an interior surface of the bottom 2 to the maximal water fill level.

In the example embodiment of figure 6b, the first water outlet arrangement 6a has three individual sets of circular outlet openings 60, each set of outlet openings 60 extending in the vertical direction 10 over a certain vertical length 77. Moreover, the three individual sets of outlet openings 60 are arranged aligned in a vertical direction 10 with a vertical distance 78 between each neighbouring set of outlet openings 60.

The three individual sets of outlet openings 60 jointly define an outer border of a water outlet region, which extends in a vertical direction over more than 50%, specifically 65%, and more specifically 80% of the maximal depth 7. In fact, the water outlet region defined by the three sets of outlet openings 60 in figure 6b extends in a vertical direction over a length 16 of about 90% of the maximal depth 7.

In the embodiment of figure 6b, all three individual sets of outlet openings 60 define the water outlet region because the maximal vertical distance 78 between neighbouring outlet openings 60 is smaller than 40% of the maximal depth 7 and the horizontal distance between neighbouring outlet openings 60 of the first water outlet arrangement 6a is smaller than 75% of a maximal interior horizontal length 46 of the tank 1.

In the example embodiment of figure 6c, the first water outlet arrangement 6a has eight individual sets of circular outlet openings 60, each set of outlet openings 60 extending in the vertical direction 10 over a certain vertical length 77. Moreover, the eight individual sets of outlet openings 60 are arranged aligned in a vertical direction 10 with a maximal vertical distance 78 between neighbouring set of outlet openings 60.

The eight individual sets of outlet openings 60 jointly define an outer border of a water outlet region, which extends in a vertical direction over more than 50%, specifically 65%, and more specifically 80% of the maximal depth 7. In fact, the water outlet region defined by the eight sets of outlet openings 60 in figure 6c extends in a vertical direction over a length 16 of about 90% of the maximal depth 7.

In the embodiment of figure 6c, all eight individual sets of outlet openings 60 define the water outlet region because the maximal vertical distance 78 between neighbouring outlet openings 60 is smaller than 40% of the maximal depth 7 and the horizontal distance between neighbouring outlet openings 60 of the first water outlet arrangement 6a is smaller than 75% of a maximal interior horizontal length 46 of the tank 1.

In the example embodiment of figure 6d, the first water outlet arrangement 6a, the first water outlet arrangement 6a has four individual sets of circular outlet openings 60, each set of outlet openings 60 extending in the vertical direction 10 over a certain vertical length 77. Moreover, the four individual sets of outlet openings 60 are arranged aligned in a vertical direction 10 with a maximal vertical distance 78 between neighbouring set of outlet openings 60.

The four individual sets of outlet openings 60 jointly define an outer border of a water outlet region, which extends in a vertical direction over more than 50%, specifically 65%, and more specifically 80% of the maximal depth 7. In fact, the water outlet region defined by the four sets of outlet openings 60 in figure 6d extends in a vertical direction over a length 16 of about 70% of the maximal depth 7.

In the embodiment of figure 6d, all four individual sets of outlet openings 60 define the water outlet region because the maximal vertical distance 78 between neighbouring outlet openings 60 is smaller than 40% of the maximal depth 7 and the horizontal distance between neighbouring outlet openings 60 of the first water outlet arrangement 6a is smaller than 75% of a maximal interior horizontal length 46 of the tank 1.

The water inlet region and the water outlet region have the same vertical extension, i.e. the same extension in the vertical direction. The water inlet region and the water outlet region are arranged on substantially the same level, e.g. the same horizontal level, in relation to the maximal water fill level. In other words, the water inlet region and the water outlet region are arranged on substantially the same distance from the maximal water fill level.

As described above, both the water inlet region and water outlet region has essentially the same underlying definition, namely a region having an outer border defined only by those inlet/outlet openings of the first water inlet/out arrangement forming a cluster having a vertical distance between neighbouring inlet/outlet openings of the first water inlet/outlet arrangement smaller than 3 metres or 40% of the maximal depth, specifically smaller than 1.5 metres or 25% of the maximal depth, and more specifically smaller than 0.5 metre or 10% of the maximal depth, and a horizontal distance between neighbouring inlet/outlet openings of the first water inlet/outlet arrangement smaller than 10 metres or 75% of a maximal interior horizontal length of the tank, specifically smaller than 5 metres or 40% of a maximal interior horizontal length of the tank, and more specifically smaller than 2 metres or 20% of a maximal interior horizontal length of the tank 1.

In other words, the water inlet or outlet region is defined by a cluster of inlet or outlet openings, wherein any inlet or outlet openings located spaced apart from the nearest inlet or outlet opening of the cluster with a distance larger than or equal to 3 metres or 40% of the maximal depth in the vertical direction, or larger than or equal to 10 metres or 75% of a maximal interior horizontal length of the tank in the horizontal direction, is/are deemed not being part of said water inlet region or water outlet region.

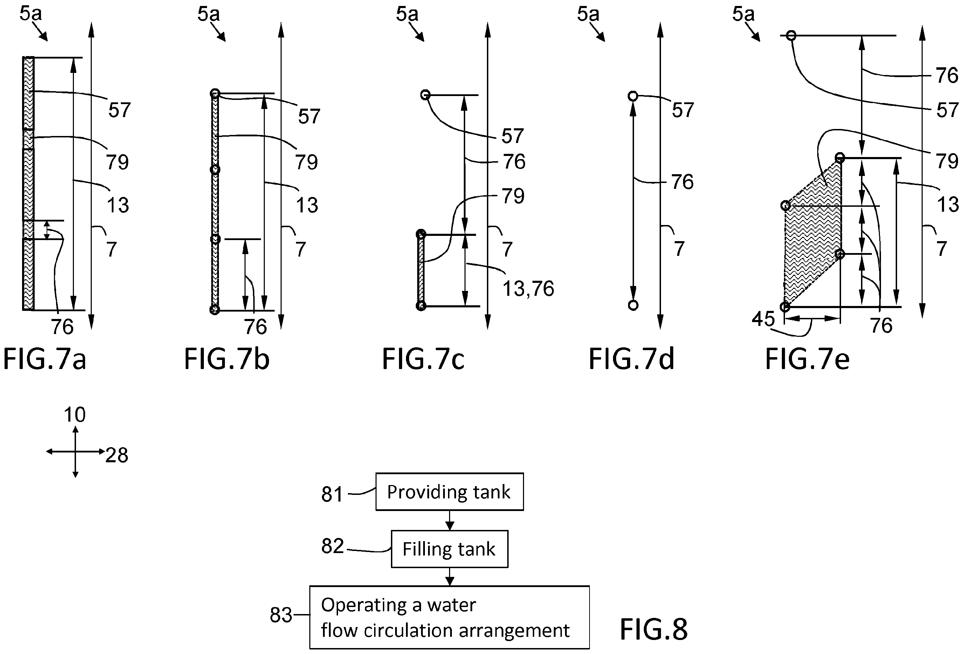

This concept will be further clarified below with reference to figure 7a-7h, which show first water inlet arrangements 5a with various example embodiments of layouts of multiple water inlet openings 57 and associated resulting water inlet regions 79. This description applies equally to any further water inlet arrangements, and also to the first water outlet arrangement 6a with various example embodiments of layouts of multiple water outlet openings 60 and associated resulting water outlet region, correspondingly.

Figure 7a shows an example embodiment of the first water inlet arrangement 5a having a cluster of three individual elongated vertically oriented water inlet openings 57 aligned in the vertical direction 10 and with neighbouring inlet openings 57 separated from each with a vertical distance 76. Since the vertical distance between neighbouring inlet openings 57 of the first water inlet arrangement 5a is smaller than 3 metres or 40% of the maximal depth 7, the outer border of the resulting water inlet region 79, which is indicated by a hatched area in figure 7a, is defined by all three inlet openings 57 of said the first water inlet arrangement 5a. Moreover, the length 13 of the water inlet region 79 in the vertical direction 10 is larger than 50% of the maximal depth 7, such that the first water inlet arrangement 5a is configured for injecting water over more than half of the maximal depth 7.

Figure 7b shows an example embodiment of the first water inlet arrangement 5a having a cluster of four individual water inlet openings 57 arranged aligned in the vertical direction 10 and with neighbouring inlet openings 57 separated from each with a vertical distance 76. Since the vertical distance between neighbouring inlet openings 57 of the first water inlet arrangement 5a is smaller than 3 metres or 40% of the maximal depth 7, the outer border of the resulting water inlet region 79, which is indicated by a hatched area in figure 7b, is defined by all four inlet openings 57 of said the first water inlet arrangement 5a. Moreover, the length 13 of the water inlet region 79 in the vertical direction 10 is larger than 50% of the maximal depth 7, such that the first water inlet arrangement 5a is configured for injecting water over more than half of the maximal depth 7.

Figure 7c shows an example embodiment of the first water inlet arrangement 5a having three individual water inlet openings 57 arranged aligned in the vertical direction 10, wherein the two lower neighbouring inlet openings 57 are separated from each with a vertical distance 76 that is smaller than 3 metres or 40% of the maximal depth 7, and wherein the two upper neighbouring inlet openings 57 are separated from each other with a vertical distance 76 that is larger than 3 metres or 40% of the maximal depth 7, such that the outer border of the resulting water inlet region 79, which is indicated by a hatched area in figure 7b, is defined only by the two lower inlet openings 57 of said the first water inlet arrangement 5a. In other words, the uppermost water inlet opening 57 is located too far away from the cluster of inlet openings formed by the two lower inlet openings 57. Consequently, the length 13 of the water inlet region 79 in the vertical direction 10 is smaller than 50% of the maximal depth 7, such that the first water inlet arrangement 5a is not configured for injecting water over more than half of the maximal depth 7.

Figure 7d shows an example embodiment of the first water inlet arrangement 5a having two individual water inlet openings 57 arranged aligned in the vertical direction 10 and separated from each other with a vertical distance 76 that is larger than 3 metres or 40% of the maximal depth 7, such that the outer border of the resulting water inlet region 79 corresponds merely to the area of one inlet opening 57 of said the first water inlet arrangement 5a. In other words, the two water inlet openings 57 are located too far away from each other to form a cluster of inlet openings. Consequently, the length of the water inlet region 79 in the vertical direction 10 is smaller than 50% of the maximal depth 7, such that the first water inlet arrangement 5a is not configured for injecting water over more than half of the maximal depth 7.

Figure 7e shows an example embodiment of the first water inlet arrangement 5a having five individual water inlet openings 57, of which three inlet openings 57 are arranged aligned in the vertical direction 10, and two inlet openings 57 are arranged aligned in the vertical direction 10 but offset from said three inlet openings in both the vertical and horizontal direction 10, 28. The four lowest inlet openings 57 are separated from each other with a vertical distance 76 that is smaller than 3 metres or 40% of the maximal depth 7 and with a horizontal distance 45 that is smaller than 10 metres or 75% of a maximal interior horizontal length of the tank. However, the uppermost inlet opening 57 is separated from its neighbouring inlet opening 57 with a vertical distance 76 that is larger than 3 metres or 40% of the maximal depth 7, such that the outer border of the resulting water inlet region 79, which is indicated by a hatched area in figure 7e, is defined only by the four lower inlet openings 57 of said the first water inlet arrangement 5a. In other words, the uppermost water inlet opening 57 is located too far away from the cluster of inlet openings formed by the four lower inlet openings 57. Moreover, the length 13 of the water inlet region 79 in the vertical direction 10 is larger than 50% of the maximal depth 7, such that the first water inlet arrangement 5a is configured for injecting water over more than half of the maximal depth 7.

The disclosure also relates to a method for generating a circulating flow of water in a fish farming tank for cultivating living fish. The method will hereinafter be briefly described with reference to figure 8, which illustrates the basic steps of the method.

A first step 81 involves providing a tank 1 having a bottom 2 and a side wall 3 defining an internal volume 4.

A second step 82 involves filling the tank 1 with water up to a water fill level 72.

Finally, a third step 83 involves operating an active flow control system for generating a circulating flow of water within the tank 1, wherein the active flow control system has a first water inlet arrangement 5a for injecting water into the internal volume 4 and a first water outlet arrangement 6a for removing water from the internal volume 4, and wherein the first water inlet arrangement 5a is configured for injecting water over more than 60%, specifically over more than 70%, and more specifically over more than 80% of the water depth stretching from an interior surface of the bottom 2 to the water fill level 72.

The third step 83 also includes that the first water outlet arrangement 6a is configured for sucking water over more than 60%, specifically over more than 70%, and more specifically over more than 80% of the water depth. This further contributes to an improved uniform and laminar flow throughout the entire tank.

The method and the tank of the method, including its components such as the inlet and outlet arrangements, may include the features and be designed as described above and involve corresponding steps.

That the water inlet arrangement is configured for injecting water over a certain portion, such as more than half or a certain percentage, of the water depth implies that the water inlet arrangement spans or covers said certain portion. The water inlet arrangement is configured for injecting water over a length corresponding to said portion. In particular, the water inlet arrangement is configured for injecting water over a length that is more than half or a certain percentage, such as more than 50%, more than 60%, more than 70%, more than 80% or about 90%, of the water depth. That the water outlet arrangement is configured for sucking water over a certain portion, such as more than half or a certain percentage, of the water depth implies that the water outlet arrangement spans or covers said certain portion. The water outlet arrangement is configured for sucking water over a length corresponding to said portion. In particular, the water outlet arrangement is configured for sucking water over a length that is more than half or a certain percentage, such as more than 50%, more than 60%, more than 70%, more than 80% or about 90%, of the water depth. The water inlet arrangement is to be considered to be configured for injecting water over a certain portion of the water depth in a given moment. The water outlet arrangement is to be considered to be configured for sucking water over a certain portion of the water depth in a given moment.

Although the disclosure has been described in relation to specific combinations of components, it should be readily appreciated that the components may be combined in other configurations as well which is clear for the skilled person when studying the present application. Thus, the above description of the example embodiments of the present disclosure and the accompanying drawings are to be regarded as a non-limiting example of the disclosure and the scope of protection is defined by the appended claims. Any reference sign in the claims should not be construed as limiting the scope.

Details of the tank described with reference to figure 1a-1c is generally also applicable to the tank described with reference to figures 2-7e as well as to the method, and this applies to all figures, unless clearly inconsistent combinations occur.

A maximal interior length 46 of the tank 1 may be in the range of 5 - 150 metres, specifically in the range of 20 - 120 metres. A maximal depth 7 of the tank 1 may be in the range of 2 - 30 metres, specifically in the range of 5 - 20 metres. The tank 1 may be located in land or floating in water.

The tank may have a substantially flat bottom with a substantially vertically extending side wall. Alternatively, the bottom may have a more curved shape, such as to form a smooth transition between the bottom and side wall of the tank.

The use of the word "a" or "an" in the specification may mean "one," but it is also consistent with the meaning of "one or more" or "at least one." The term "about" means, in general, the stated value plus or minus 10%, or more specifically plus or minus 5%. The use of the term "or" in the claims is used to mean "and/or" unless explicitly indicated to refer to alternatives only.

The terms "comprise", "comprises" "comprising", "have", "has", "having", "include", "includes", "including" are open-ended linking verbs. As a result, a method or device that "comprises", "has" or "includes" for example one or more steps or elements, possesses those one or more steps or elements, but is not limited to possessing only those one or more elements.

## Claims

1. Fish farming tank for cultivating living fish, wherein the tank (1) comprises:
a bottom (2) and a side wall (3) defining an internal volume (4) for holding water up to a maximal water fill level, and
an active flow control system for generating a circulating flow of water within the tank (1), wherein the active flow control system has a first water inlet arrangement (5a) for injecting water into the internal volume (4) and a first water outlet arrangement (6a) for removing water from the internal volume (4),
wherein the first water inlet arrangement (5a) is configured for injecting water over more than 50%, specifically over more than 70%, and more specifically over more than 80%, of a maximal depth (7) stretching from an interior surface of the bottom (2) to the maximal water fill level,
**characterized in that** the first water outlet arrangement (6a) is configured for sucking water over more than 50%, specifically over more than 70%, and more specifically over more than 80%, of the maximal depth (7).

2. Fish farming tank according to any of the preceding claims, wherein the first water inlet arrangement (5a) has one elongated inlet opening (157) or a plurality of inlet openings (57) for injecting water into the internal volume (4).

3. Fish farming tank according to claim 2, wherein the one or plurality of inlet openings (157, 57) of the first water inlet arrangement (5a) define an outer border of a water inlet region (79), and wherein the water inlet region (79) extends in a vertical direction (10) over more than 50%, specifically 65%, and more specifically 80% of the maximal depth (7).

4. Fish farming tank according to claim 3, wherein said outer border of said water inlet region (5a) is defined only by those inlet openings (57) of the first water inlet arrangement (5a) forming a cluster having
a vertical distance (76) between neighbouring inlet openings (57) of the first water inlet arrangement (5a) smaller than 3 metres or 40% of the maximal depth (7), specifically smaller than 1.5 metres or 25% of the maximal depth (7), and more specifically smaller than 0.5 metre or 10% of the maximal depth (7), and
a horizontal distance (45) between neighbouring inlet openings (57) of the first water inlet arrangement (5a) smaller than 10 metres or 75% of a maximal interior horizontal length (46) of the tank, specifically smaller than 5 metres or 40% of a maximal interior horizontal length (46) of the tank, and more specifically smaller than 2 metres or 20% of a maximal interior horizontal length (46) of the tank.

5. Fish farming tank according to any of the preceding claims 2 to 4, wherein the active flow control system further comprises a pump (17) having a pump outlet (20) connected to the first water inlet arrangement (5a) via a water inlet pipe (21) for supplying pressurized water to the first water inlet arrangement (5a), and wherein the active flow control system is configured such that a flow rate of the water injected at any two locations of the one elongated inlet opening (157), or at any two inlet openings (57) of the plurality of inlet openings (57), of the first water inlet arrangement (5a) do not differ more than 40%, specifically 30%, and more specifically 20%.

6. Fish farming tank according to any of the preceding claims 2 to 5, wherein the one elongated inlet opening (157), or each of the plurality of inlet openings (57), of the first water inlet arrangement (5a) is configured for injecting water in a direction substantially tangential or parallel to the side wall (3) at a location of said one elongated inlet opening (157), or at the location of each of said plurality of inlet openings (57), respectively.

7. Fish farming tank according to any of the preceding claims 2 to 6, wherein the one or plurality of inlet openings (157, 57) of the first water inlet arrangement (5a) are located at the side wall (3) of the tank (1).

8. Fish farming tank according to any of the preceding claims 2 to 7, wherein the one or plurality of inlet openings (157, 57) of the first water inlet arrangement (5a) extends or are arranged primarily in a vertical direction (10).

9. Fish farming tank according to any of the preceding claims, wherein the first water outlet arrangement (6a) has one elongated outlet opening (115) or a plurality of outlet openings (15) for emptying water from the internal volume (4), and preferably the one or plurality of outlet openings (15) of the first water outlet arrangement (6a) are located at a central location of the tank (1).

10. Fish farming tank according to any of the preceding claims, wherein the tank (1) has a circular, oval, square or rectangular overall shape, as seen from above.

11. Fish farming tank according to any of the preceding claims, wherein the active flow control system has two, three, four, five, six, or more water inlet arrangements (5a,5b,5c,5d) located distributed around the periphery of the side wall (3) for injecting water into the internal volume (4).

12. Fish farming tank according to any of the preceding claims, wherein the tank (1) has a square or rectangular overall shape, as seen from above, and wherein the active flow control system has one water inlet arrangement (5a) for injecting water into the internal volume (4) located at each corner of tank, as seen from above.

13. Fish farming tank according to any of the preceding claims, wherein the first water inlet arrangement (5a) is configured for injecting water and the first water outlet arrangement (6a) is configured for sucking water over substantially the same length of the maximal depth (7).

14. Method for generating a circulating flow of water in a fish farming tank for cultivating living fish, the method comprising:
providing a tank (1) having a bottom (2) and a side wall (3) defining an internal volume (4), filling the tank (1) with water up to a water fill level (72),
operating an active flow control system for generating a circulating flow of water within the tank (1), wherein the active flow control system has a first water inlet arrangement (5a) for injecting water into the internal volume (4) and a first water outlet arrangement (6a) for removing water from the internal volume (4), wherein the first water inlet arrangement (5a) is configured for injecting water over more than 60%, specifically over more than 70%, and more specifically over more than 80% of a maximal water depth (7) stretching from an interior surface of the bottom to a maximal water level, and wherein the first water outlet arrangement (6a) is configured for sucking water over more than 60%, specifically over more than 70%, and more specifically over more than 80%, of the (maximal) water depth.

## Patentansprüche

1. Fischzuchtbecken zur Aufzucht von lebenden Fischen, wobei das Becken (1) umfasst:
einen Boden (2) und eine Seitenwand (3), die ein Innenvolumen (4) zur Aufnahme von Wasser bis zu einem maximalen Wasserfüllstand definieren, und
ein aktives Durchflusssteuerungssystem zur Erzeugung einer zirkulierenden Wasserströmung innerhalb des Beckens (1), wobei das aktive Durchflusssteuerungssystem eine erste Wassereinlassanordnung (5a) zum Einspeisen von Wasser in das Innenvolumen (4) und eine erste Wasserauslassanordnung (6a) zum Entfernen von Wasser aus dem Innenvolumen (4) aufweist,
wobei die erste Wassereinlassanordnung (5a) zum Einspeisen von Wasser über mehr als 50 %, insbesondere über mehr als 70 % und noch spezifischer über mehr als 80 % einer maximalen Tiefe (7), die sich von einer Innenfläche des Bodens (2) bis zum maximalen Wasserfüllstand erstreckt, konfiguriert ist,
**dadurch gekennzeichnet, dass** die erste Wasserauslassanordnung (6a) zum Ansaugen von Wasser über mehr als 50 %, insbesondere über mehr als 70 % und noch spezifischer über mehr als 80 % der Wassertiefe (7) konfiguriert ist.

2. Fischzuchtbecken nach einem der vorhergehenden Ansprüche, wobei die erste Wassereinlassanordnung (5a) eine längliche Einlassöffnung (157) oder eine Vielzahl von Einlassöffnungen (57) zum Einspeisen von Wasser in das Innenvolumen (4) aufweist.

3. Fischzuchtbecken nach Anspruch 2, wobei die eine oder die Vielzahl von Einlassöffnungen (157, 57) der ersten Wassereinlassanordnung (5a) eine äußere Begrenzung eines Wassereinlassbereichs (79) definieren und wobei der Wassereinlassbereich (79) sich in vertikaler Richtung (10) über mehr als 50 %, insbesondere 65 % und noch spezifischer 80 % der maximalen Tiefe (7) erstreckt.

4. Fischzuchtbecken nach Anspruch 3, wobei die äußere Grenze des Wassereinlassbereichs (5a) nur durch diejenigen Einlassöffnungen (57) der ersten Wassereinlassanordnung (5a) definiert ist, die eine Gruppe bilden, welche Folgendes aufweist:
einen vertikalen Abstand (76) zwischen benachbarten Einlassöffnungen (57) der ersten Wassereinlassanordnung (5a), der kleiner ist als 3 Meter oder 40 % der maximalen Tiefe (7), insbesondere kleiner als 1,5 Meter oder 25 % der maximalen Tiefe (7), und noch spezifischer kleiner als 0,5 Meter oder 10 % der maximalen Tiefe (7), und
einen horizontalen Abstand (45) zwischen benachbarten Einlassöffnungen (57) der ersten Wassereinlassanordnung (5a), der kleiner ist als 10 Meter oder 75 % einer maximalen inneren horizontalen Länge (46) des Beckens, insbesondere kleiner als 5 Meter oder 40 % einer maximalen inneren horizontalen Länge (46) des Beckens, und noch spezifischer kleiner als 2 Meter oder 20 % einer maximalen inneren horizontalen Länge (46) des Beckens.

5. Fischzuchtbecken nach einem der vorhergehenden Ansprüche 2 bis 4, wobei das aktive Durchflusssteuerungssystem ferner eine Pumpe (17) mit einem Pumpenauslass (20) umfasst, der über eine Wassereinlassleitung (21) mit der ersten Wassereinlassanordnung (5a) verbunden ist, um der ersten Wassereinlassanordnung (5a) Druckwasser zuzuführen, und wobei das aktive Durchflusssteuerungssystem so konfiguriert ist, dass eine Durchflussrate des Wassers, das an zwei beliebigen Orten der einen länglichen Einlassöffnung (157) oder an zwei beliebigen Einlassöffnungen (57) der Vielzahl von Einlassöffnungen (57) der ersten Wassereinlassanordnung (5a) eingespeist wird, sich um nicht mehr als 40 %, insbesondere 30 %, und noch spezifischer 20 % unterscheidet.

6. Fischzuchtbecken nach einem der vorhergehenden Ansprüche 2 bis 5, wobei die eine längliche Einlassöffnung (157) oder jede der Vielzahl von Einlassöffnungen (57) der ersten Wassereinlassanordnung (5a) dafür konfiguriert ist, an einem Ort der einen länglichen Einlassöffnung (157) beziehungsweise am Ort jeder der Vielzahl von Einlassöffnungen (57) Wasser in einer Richtung einzuspeisen, die im Wesentlichen tangential oder parallel zu der Seitenwand (3) ist.

7. Fischzuchtbecken nach einem der vorhergehenden Ansprüche 2 bis 6, wobei die eine oder die Vielzahl von Einlassöffnungen (157, 57) der ersten Wassereinlassanordnung (5a) an der Seitenwand (3) des Beckens (1) angeordnet sind.

8. Fischzuchtbecken nach einem der vorhergehenden Ansprüche 2 bis 7, wobei die eine oder die Vielzahl von Einlassöffnungen (157, 57) der ersten Wassereinlassanordnung (5a) sich hauptsächlich in einer vertikalen Richtung (10) erstreckt oder angeordnet sind.

9. Fischzuchtbecken nach einem der vorhergehenden Ansprüche, wobei die erste Wasserauslassanordnung (6a) eine längliche Auslassöffnung (115) oder eine Vielzahl von Auslassöffnungen (15) zum Entleeren von Wasser aus dem Innenvolumen (4) aufweist und vorzugsweise die eine oder die Vielzahl von Auslassöffnungen (15) der ersten Wasserauslassanordnung (6a) an einem zentralen Ort des Beckens (1) angeordnet sind.

10. Fischzuchtbecken nach einem der vorhergehenden Ansprüche, wobei das Becken (1) in der Draufsicht eine runde, ovale, quadratische oder rechteckige Gesamtform aufweist.

11. Fischzuchtbecken nach einem der vorhergehenden Ansprüche, wobei das aktive Durchflusssteuerungssystem zwei, drei, vier, fünf, sechs oder mehr Wassereinlassanordnungen (5a, 5b, 5c, 5d) aufweist, die über den Umfang der Seitenwand (3) verteilt angeordnet sind, um Wasser in das Innenvolumen (4) einzuspeisen.

12. Fischzuchtbecken nach einem der vorhergehenden Ansprüche, wobei das Becken (1) in der Draufsicht eine quadratische oder rechteckige Gesamtform aufweist und wobei das aktive Durchflusssteuerungssystem eine Wassereinlassanordnung (5a) zum Einspeisen von Wasser in das Innenvolumen (4) aufweist, die in der Draufsicht an jeder Ecke des Beckens angeordnet ist.

13. Fischzuchtbecken nach einem der vorhergehenden Ansprüche, wobei die erste Wassereinlassanordnung (5a) zum Einspeisen von Wasser konfiguriert ist und die erste Wasserauslassanordnung (6a) zum Ansaugen von Wasser konfiguriert ist, und zwar im Wesentlichen über die gleiche Länge der maximalen Tiefe (7).

14. Verfahren zur Erzeugung einer zirkulierenden Wasserströmung in einem Fischzuchtbecken zur Aufzucht von lebenden Fischen, wobei das Verfahren umfasst:
Bereitstellen eines Beckens (1) mit einem Boden (2) und einer Seitenwand (3), die ein Innenvolumen (4) definieren,
Füllen des Beckens (1) mit Wasser bis zu einem Wasserfüllstand (72),
Betreiben eines aktiven Durchflusssteuerungssystems zur Erzeugung einer zirkulierenden Wasserströmung innerhalb des Beckens (1), wobei das aktive Durchflusssteuerungssystem eine erste Wassereinlassanordnung (5a) zum Einspeisen von Wasser in das Innenvolumen (4) und eine erste Wasserauslassanordnung (6a) zum Entfernen von Wasser aus dem Innenvolumen (4) aufweist, wobei die erste Wassereinlassanordnung (5a) zum Einspeisen von Wasser über mehr als 60 %, insbesondere über mehr als 70 % und noch spezifischer über mehr als 80 % einer maximalen Tiefe (7), die sich von einer Innenfläche des Bodens bis zu einem maximalen Wasserfüllstand erstreckt, konfiguriert ist, und wobei die erste Wasserauslassanordnung (6a) zum Ansaugen von Wasser über mehr als 60 %, insbesondere über mehr als 70 % und noch spezifischer über mehr als 80 % der (maximalen) Wassertiefe konfiguriert ist.

## Revendications

1. Bassin piscicole pour l'élevage de poissons vivants, le bassin (1) comprenant :
un fond (2) et une paroi latérale (3) définissant un volume interne (4) pour contenir de l'eau jusqu'à un niveau de remplissage d'eau maximal, et
un système de régulation actif du débit pour générer un flux d'eau en circulation à l'intérieur du bassin (1), le système de régulation actif du débit ayant un premier agencement d'entrée d'eau (5a) pour injecter de l'eau dans le volume interne (4) et un premier agencement de sortie d'eau (6a) pour évacuer l'eau du volume interne (4) ;
ledit premier agencement d'entrée d'eau (5a) étant configuré pour injecter de l'eau sur plus de 50 %, spécifiquement sur plus de 70 % et plus spécifiquement sur plus de 80 % d'une profondeur maximale (7) s'étendant depuis une surface intérieure du fond (2) jusqu'au niveau de remplissage d'eau maximal,
**caractérisé en ce que** le premier agencement de sortie d'eau (6a) est configuré pour aspirer de l'eau sur plus de 50 %, spécifiquement sur plus de 70 % et plus spécifiquement sur plus de 80 % de la profondeur maximale (7).

2. Bassin piscicole selon l'une quelconque des revendications précédentes, dans lequel le premier agencement d'entrée d'eau (5a) comporte une ouverture d'entrée allongée (157) ou une pluralité d'ouvertures d'entrée (57) pour injecter de l'eau dans le volume interne (4).

3. Bassin piscicole selon la revendication 2, dans lequel ladite ouverture d'entrée ou ladite pluralité d'ouvertures d'entrée (157, 57) du premier agencement d'entrée d'eau (5a) définissent une délimitation extérieure d'une région d'entrée d'eau (79), et dans lequel la région d'entrée d'eau (79) s'étend dans une direction verticale (10) sur plus de 50 %, spécifiquement 65 % et plus spécifiquement 80 % de la profondeur maximale (7).

4. Bassin piscicole selon la revendication 3, dans lequel ladite délimitation extérieure de ladite région d'entrée d'eau (5a) est définie uniquement par les ouvertures d'entrée (57) du premier agencement d'entrée d'eau (5a) qui forment un groupe ayant
une distance verticale (76) entre des ouvertures d'entrée voisines (57) du premier agencement d'entrée d'eau (5a) inférieure à 3 mètres ou 40 % de la profondeur maximale (7), spécifiquement inférieure à 1,5 mètre ou 25 % de la profondeur maximale (7) et plus spécifiquement inférieure à 0,5 mètre ou 10 % de la profondeur maximale (7), et
une distance horizontale (45) entre des ouvertures d'entrée voisines (57) du premier agencement d'entrée d'eau (5a), inférieure à 10 mètres ou 75 % d'une longueur horizontale intérieure maximale (46) du bassin, spécifiquement inférieure à 5 mètres ou 40 % d'une longueur horizontale intérieure maximale (46) du bassin et plus spécifiquement inférieure à 2 mètres ou 20% d'une longueur horizontale intérieure maximale (46) du bassin.

5. Bassin piscicole selon l'une quelconque des revendications précédentes 2 à 4, dans lequel le système de régulation actif du débit comprend en outre une pompe (17) ayant une sortie de pompe (20) reliée au premier agencement d'entrée d'eau (5a) par un tuyau d'entrée d'eau (21) pour fournir de l'eau sous pression au premier agencement d'entrée d'eau (5a), et dans lequel le système de régulation actif du débit est configuré de manière qu'un débit de l'eau injectée à deux emplacements quelconques de l'ouverture d'entrée allongée (157), ou au niveau de deux ouvertures d'entrée (57) quelconques de la pluralité d'ouvertures d'entrée (57) du premier agencement d'entrée d'eau (5a) ne diffère pas de plus de 40 %, spécifiquement 30 % et plus spécifiquement 20 %.

6. Bassin piscicole selon l'une quelconque des revendications précédentes 2 à 5, dans lequel l'ouverture d'entrée allongée (157) ou chacune de la pluralité d'ouvertures d'entrée (57) du premier agencement d'entrée d'eau (5a) est respectivement configurée pour injecter de l'eau dans une direction sensiblement tangentielle ou parallèle à la paroi latérale (3) à un emplacement de ladite une ouverture d'entrée allongée (157) ou à l'emplacement de chacune de ladite pluralité d'ouvertures d'entrée (57).

7. Bassin piscicole selon l'une quelconque des revendications précédentes 2 à 6, dans lequel l'ouverture d'entrée ou ladite pluralité d'ouvertures d'entrée (157, 57) du premier agencement d'entrée d'eau (5a) sont situées au niveau de la paroi latérale (3) du bassin (1).

8. Bassin piscicole selon l'une quelconque des revendications précédentes 2 à 7, dans lequel l'ouverture d'entrée ou ladite pluralité d'ouvertures d'entrée (157, 57) du premier agencement d'entrée d'eau (5a) s'étend ou sont disposées principalement dans une direction verticale (10).

9. Bassin piscicole selon l'une quelconque des revendications précédentes, dans lequel le premier agencement de sortie d'eau (6a) comporte une ouverture de sortie allongée (115) ou une pluralité d'ouvertures de sortie (15) pour vider l'eau du volume interne (4), et de préférence l'ouverture de sortie ou la pluralité d'ouvertures de sortie (15) du premier agencement de sortie d'eau (6a) sont situées en un emplacement central du bassin (1).

10. Bassin piscicole selon l'une quelconque des revendications précédentes, ledit bassin (1) présentant une forme globalement circulaire, ovale, carrée ou rectangulaire, vu de dessus.

11. Bassin piscicole selon l'une quelconque des revendications précédentes, dans lequel le système de régulation actif du débit comporte deux, trois, quatre, cinq, six agencements d'entrée d'eau (5a, 5b, 5c, 5d) ou davantage, répartis autour de la périphérie de la paroi latérale (3) pour injecter de l'eau dans le volume interne (4).

12. Bassin piscicole selon l'une quelconque des revendications précédentes, ledit bassin (1) présentant une forme globalement carrée ou rectangulaire, vu de dessus, et dans lequel le système de régulation actif du débit comporte un agencement d'entrée d'eau (5a) situé à chaque coin du bassin, vu de dessus, pour injecter de l'eau dans le volume interne (4).

13. Bassin piscicole selon l'une quelconque des revendications précédentes, dans lequel le premier agencement d'entrée d'eau (5a) est configuré pour injecter de l'eau et le premier agencement de sortie d'eau (6a) est configuré pour aspirer de l'eau sur sensiblement la même longueur de la profondeur maximale (7).

14. Procédé de génération d'un flux d'eau en circulation dans un bassin piscicole pour l'élevage de poissons vivants, le procédé comprenant :
la fourniture d'un bassin (1) ayant un fond (2) et une paroi latérale (3) définissant un volume interne (4),
le remplissage du bassin (1) avec de l'eau jusqu'à un niveau de remplissage d'eau (72),
l'exploitation d'un système de régulation actif du débit pour générer un flux d'eau en circulation à l'intérieur du bassin (1), ledit système de régulation actif du débit ayant un premier agencement d'entrée d'eau (5a) pour injecter de l'eau dans le volume interne (4) et un premier agencement de sortie d'eau (6a) pour évacuer l'eau du volume interne (4), ledit premier agencement d'entrée d'eau (5a) étant configuré pour injecter de l'eau sur plus de 60 %, spécifiquement sur plus de 70 % et plus spécifiquement sur plus de 80 % d'une profondeur d'eau maximale (7) s'étendant depuis une surface intérieure du fond jusqu'à un niveau de remplissage d'eau maximal, et ledit premier agencement de sortie d'eau (6a) étant configuré pour aspirer de l'eau sur plus de 60 %, spécifiquement sur plus de 70 % et plus précisément sur plus de 80% de la profondeur d'eau (maximale).
